(19)

Europäisches
Patentamt
European
Patent Office
Office européen
des brevets

(11) **EP 4 012 723 A1**

(12) **EUROPEAN PATENT APPLICATION**
published in accordance with Art. 153(4) EPC

(43) Date of publication:
**15.06.2022 Bulletin 2022/24**

(21) Application number: **19937911.6**

(22) Date of filing: **02.12.2019**

(51) International Patent Classification (IPC):
**G21C 17/003** (2006.01)

(52) Cooperative Patent Classification (CPC):
**Y02E 30/30**

(86) International application number:
**PCT/CN2019/122438**

(87) International publication number:
**WO 2021/008064 (21.01.2021 Gazette 2021/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.07.2019 CN 201910635715**

(71) Applicants:
• **China Nuclear Power Engineering Co., Ltd.**
  **Shenzhen, Guangdong 518124 (CN)**
• **Tsinghua University**
  **Beijing 100084 (CN)**

(72) Inventors:
• **LI, Chengliang**
  **Shenzhen, Guangdong 518124 (CN)**
• **SHU, Guogang**
  **Shenzhen, Guangdong 518124 (CN)**
• **LIU, Wei**
  **Shenzhen, Guangdong 518100 (CN)**
• **TAN, Ke**
  **Shenzhen, Guangdong 518124 (CN)**
• **ZHAO, Jianguang**
  **Shenzhen, Guangdong 518124 (CN)**
• **DUAN, Yuangang**
  **Shenzhen, Guangdong 518124 (CN)**

(74) Representative: **Greaves Brewster LLP**
  **Copa House**
  **Station Road**
  **Cheddar, Somerset BS27 3AH (GB)**

(54) **METHOD FOR MONITORING IRRADIATION EMBRITTLEMENT OF NUCLEAR POWER PLANT REACTOR PRESSURE VESSEL**

(57) The present invention provides a method for monitoring irradiation embrittlement of a nuclear power plant reactor pressure vessel, including the steps of: 1) acquiring an electromagnetic performance parameter value Xo and a mechanical performance parameter value Yo of reactor pressure vessel steel in an initial state; 2) testing in real time to acquire an electromagnetic performance parameter X of the reactor pressure vessel steel at a certain designated time point and at a monitoring location after being subjected to irradiation embrittlement; and 3) determining a mechanical performance parameter Y according to a function relationship $\delta(Y) = A+B*\exp[C*\delta(X)]$, wherein the electromagnetic performance change rate $\delta(X)=|X-X_0|/X_0$, the mechanical performance change rate $\delta(Y)=|Y-Y_0|/Y_0$, and A, B and C are calculation coefficients. Compared with the prior art, the method for monitoring irradiation embrittlement of a nuclear power plant reactor pressure vessel of the present invention can achieve real time, continuous and repeated non-destructive measurement. The data is ac- curate and the testing operation is safe. In addition, the degree of irradiation embrittlement at a number of locations of the reactor pressure vessel can be monitored simultaneously.

Fig. 1

**Description**

**FIELD OF THE INVENTION**

The present invention generally relates to nuclear power plants and, more particularly, relates to a method for monitoring irradiation embrittlement of nuclear power plant reactor pressure vessel.

**BACKGROUND OF THE INVENTION**

Nuclear safety is the premise and highest principle of nuclear power development, and radiation embrittlement of reactor pressure vessel is an important part of nuclear safety. Reactor pressure vessel is one of the most critical equipment in the nuclear steam supply system of a nuclear power plant. It is the only large-scale equipment that cannot be replaced during the whole life of the nuclear power plant. The safe service life of the reactor pressure vessel determines the operating life and economy of the nuclear power plant. The reactor pressure vessel is a steel pressure vessle configured to support the core fuel assembly, the control assembly, the internal parts in the reactor and contain the primary circuit coolant. The reactor pressure vessel is the second important barrier for nuclear island core radioactive safety protection. The reactor pressure vessel has been used for a long time in the harsh environment of strong irradiation, high temperature, high pressure and strong fluid scouring. The neutron irradiation embrittlement may cause deterioration of material performances, such as increased tensile strength and reduced impact toughness and break strength, which may lead to brittle fracture failure of the reactor pressure vessel, namely the main failure mode of the reactor pressure vessel.

In order to ensure the safety of the reactor pressure vessel during the operation of the nuclear power plant, it is necessary to regularly monitor the neutron irradiation embrittlement degree of the reactor pressure vessel steel, and then carry out the structural integrity assessment. The changes of mechanical performances of the reactor pressure vessel steel during neutron irradiation embrittlement acts as the design input of the assesment. At present, commercial nuclear power plants mainly monitor and evaluate the irradiation embrittlement degree of reactor pressure vessels through irradiation supervision samples method including the steps of:

(1) Before the first charging operation of the nuclear power plant, 4 to 6 irradiation supervision tubes are installed in the reactor pressure vessel, and each irradiation supervision tube is equipped with a certain number of samples for mechanical performances test, such as tensile, impact, and fracture toughness;

(2) According to the irradiation supervision tube extraction plan in the irradiation supervision program, the irradiation supervision tubes are regularly extracted from the reactor pressure vessel by using the time window for refueling and maintaining of the nuclear power plant, packaged according to the irradiation protection requirements and transferred to a hot chamber via long distance transportion. The package is cut to dissect the mechanical performances samples and carry out the corresponding mechanical performances tests respectively, so as to obtain the mechanical performances data of the irradiation supervised samples, such as tensile strength, impact toughness and fracture toughness;

(3) The above-mentioned mechanical performances test results and the lead factor of the irradiation supervision sample are converted and used to evaluate the structural integrity of the reactor pressure vessel and evaluate the neutron irradiation embrittlement degree, so as to adjust the operating parameters of the reactor pressure vessel timely and ensure the safety of the nuclear power plants.

According to the extraction plan of the irradiation supervision tubes described in step (2), the irradiation supervision tubes are generally extracted from the third year of operation, the extraction of six irradiation supervision tubes is completed in the 13th year, the lead factor is basically maintained as 4.5- 4.6, and the value is relatively scientific and reasonable.

However, with the stricter requirements of nuclear safety supervision on the irradiation supervision of reactor pressure vessels, and the new challenges raised by the nuclear power plant life extension demonstration work, practical experience shows that the above-mentioned irradiation supervision method at least has the following disadvantages:

(1) Since the mechanical performances of the reactor pressure vessel cannot be directly obtained, it needs to be converted based on the lead factor. There is a certain error. When the lead factor is large, the magnification effect of the error is more obvious, and the representativeness of the obtained mechanical performance changes will be poor.

(2) Since the number of irradiation supervision tubes is limited (usually 4-6, and they must be installed at one time before the first charging operation, the existing technology cannot realize the supplementary installation of irradiation supervision tubes after a period of operation), and the number of irradiation supervision tubes loaded by each irradiation supervision tube is also very limited, continuous monitoring and real-time monitoring cannot be achieved during the service period of the reactor pressure vessel. At the same time, it cannot fully meet the irradiation supervision requirements of the reactor pressure vessel during the life extension of the nuclear power plant in the future.

(3) After an irradiation supervision tube is extracted from the reactor pressure vessel, it must be transported from the nuclear power plant to the designated hot chamber over long distances across provinces. Because the irradiation supervision tube has very high radioactivity, the security requirements during transportation are very high, and transportation costs are very large.

(4) Since the mechanical performance test of the irradiation supervision sample is a destructive test, a large amount of radioactive waste will be produced after the test, and the cost for treating the large amount of subsequent wastes is very high.

(5) It can only monitor the irradiation embrittlement degree of the annular zone of the reactor pressure vessel, i.e. the area with the most serious irradiation embrittlement. The irradiation embrittlement degree of other locations of the reactor pressure vessel cannot be monitored; especially the changes of the irradiation embrittlement degree of specific locations cannot be tracked.

In view the foregoing, what is needed, therefore, is to provide an accurate, economical, environmentally friendly, safe and efficient method for monitoring irradiation embrittlement of nuclear power plant reactor pressure vessel.

## SUMMARY OF THE INVENTION

One object of the present invention is to provide an accurate, economical, environmentally friendly, safe and efficient method for monitoring irradiation embrittlement of nuclear power plant reactor pressure vessel.

According to one embodiment of the present invention, a method for monitoring irradiation embrittlement of nuclear power plant reactor pressure vessel, including the steps of:

1) acquiring an electromagnetic performance parameter value Xo and a mechanical performance parameter value Yo of a reactor pressure vessel steel in an initial state;

2) testing in real time to acquire an electromagnetic performance parameter X of the reactor pressure vessel steel at a certain designated time point and at a monitoring location after being subjected to irradiation embrittlement; and

3) determining a mechanical performance parameter Y according to a function relationship $\delta(Y) = A + B*\exp[C*\delta(X)]$, wherein an electromagnetic performance change rate $\delta(X) = |X - X_0|/X_0$, an mechanical performance change rate $\delta(Y) = |Y - Y_0|/Y_0$, and A, B and C are calculation coefficients.

According to one aspect of the present invention, the electromagnetic performance parameter is any one of resistivity, initial magnetic susceptibility, and saturation magnetization work, and the mechanical performance parameter is any one of real-time tensile strength $R_m$, real-time upper platform energy USE, ductile-brittle transition temperature RTNDT, and reference temperature $T_0$.

According to one aspect of the present invention, the electromagnetic performance parameter value Xo and the mechanical performance parameter value Yo of the reactor pressure vessel steel in initial state are acquired via searching relevant data in a completion report provided by an equipment manufacturer.

According to one aspect of the present invention, for a specific nuclear power plant and reactor pressure vessel, the calculation coefficients A, B, and C can be determined or revised by traditional mechanical performances test of irradiated supervised samples, and for a specific reactor pressure vessel, the calculation coefficients A, B, and C remain unchanged throughout the operating life of the nuclear power plant.

According to one aspect of the present invention, for different electromagnetic performance parameters, values of calculation coefficients A, B and C are determined respectively.

According to one aspect of the present invention, the values of the calculation coefficients A, B, and C are affected by radiation-sensitive composition and microstructure characteristics of the reactor pressure vessel steel in initial state, and energy spectrum of a reactor neutron irradiation field during operation of the nuclear power plant.

According to one aspect of the present invention, the microstructure characteristics include grain size, type and number density of dislocation, and distribution features of a second phase.

According to one aspect of the present invention, the method for monitoring irradiation embrittlement of nuclear power plant reactor pressure vessel further includes 4) carrying out safety evaluation and life prediction of structural integrity in radiation embrittlement process of the reactor pressure vessel according to the mechanical performance parameters obtained.

According to one aspect of the present invention, in step 2), the electromagnetic performance parameter X of the reactor pressure vessel steel at a certain designated time point and at a monitoring location after being subjected to irradiation-embrittlement is obtained via an online, non-destructive real-time test.

According to one aspect of the present invention, the calculation coefficients A, B, and C are obtained by an experience reference method or a calculation method.

Compared with the prior art, the method for monitoring irradiation embrittlement of nuclear power plant reactor pressure vessel of the present invention has the following advantages:

(1) The electromagnetic performances of the reactor pressure vessel steel during the operation of the nuclear power plant can be tested in real time, and the change of the mechanical performances data of the reactor pressure vessel steel can be obtained by real-time calculation. The electromagnetic performances of the reactor pressure vessel steel are tested non-destructively, and the number of tests is not limited. Therefore, during the whole life of the nuclear power plant, the irradiation damage fluence and mechanical performances changes of the reactor pressure vessel (RPV) can be monitored continuously in real time and it can also be used for the RPV irradiation supervision during the life extension operation of the nuclear power plant in the future.

(2) The test equipments and operation do not require special irradiation safety protection, and there is almost no requirement for the external space of the equipments. Therefore, the method for monitoring radiation embrittlement of a nuclear power plant reactor pressure vessel of the present invention has low cost and good safety. No radioactive waste is generated, and there is no need for waste treatment.

(3) The irradiation embrittlement degree of multiple locations of the reactor pressure vessel can be monitored at the same time. The change of the irradiation embrittlement degree of a specific position, such as monitoring the initiation and extension behavior of micro-cracks or suspected micro-cracks found during in-service inspections can be tracked.

**BRIEF DESCRIPTION OF THE DRAWINGS**

The method for monitoring irradiation embrittlement of nuclear power plant reactor pressure vessel and beneficial technical effects thereof will be described in detail with reference to the accompanying drawings and embodiments.

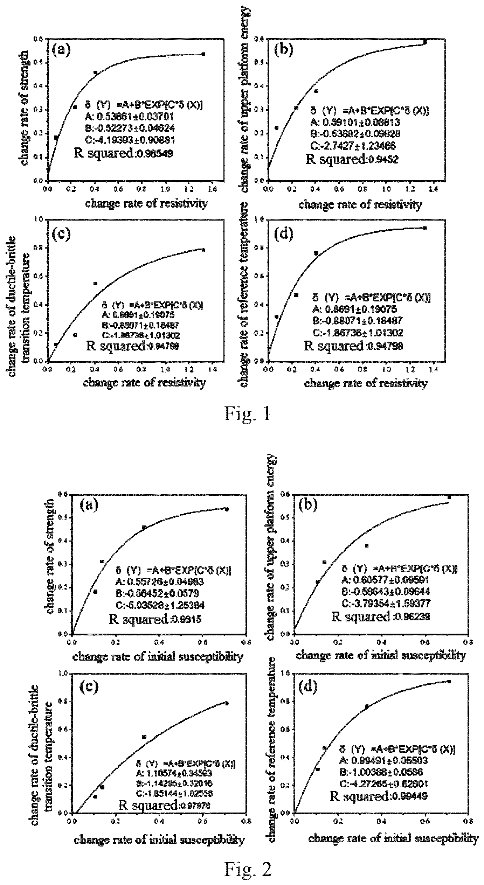

Fig. 1 is a functional relationship diagram of mechanical performances and resistivity in the method for monitoring irradiation embrittlement of nuclear power plant reactor pressure vessel according to one embodiment of the present invention, wherein (a)-(d) each shows the functional relationship between the change rate of mechanical performances parameters and the change rate of the resistivity in turn, the mechanical performances parameters include the tensile strength, the upper platform energy, the ductile-brittle transition temperature and the reference temperature;

Fig. 2 is a functional relationship diagram of mechanical performances and initial magnetic susceptibility in the method for monitoring the irradiation embrittlement of a nuclear power plant reactor pressure vessel according to one embodiment of the present invention, wherein (a)-(d) each shows the functional relationship between the mechanical performances parameter and the change rate of the initial susceptibility in turn, the mechanical performances parameter includes the tensile strength, the upper platform energy, the ductile-brittle transition temperature and the change rate of the reference temperature; and

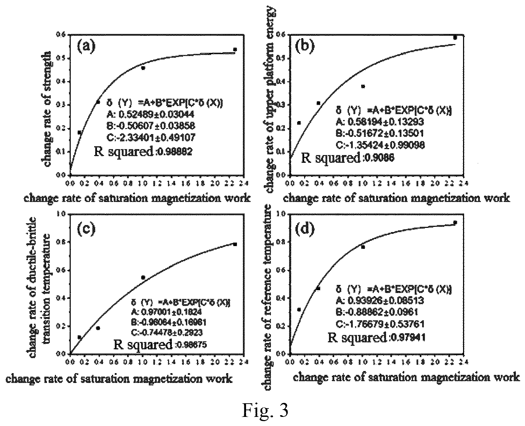

Fig. 3 is a functional relationship diagram of mechanical performances and saturation magnetization work in the method for monitoring irradiation embrittlement of nuclear power plant reactor pressure vessel according to one embodiment of the present invention, wherein (a)-(d) each shows the functional relationship between the mechanical performances parameter and the change rate of the saturation magnetization work in turn, the mechanical performances parameter includes the strength, the upper platform energy, the ductile-brittle transition temperature and the change rate of the reference temperature.

**DETAILED DESCRIPTION OF THE INVENTION**

In order to make the objects, technical solutions and technical effects of the present invention clearer, the present invention will be further described in detail below with reference to the specific embodiments. It should be understood that the embodiments described in the specification below are only for explaining the present invention, rather than for limiting the present invention.

Through long-term experimental research, the inventors of the present invention have found that, during the operation of the nuclear power plant, during the embrittlement process of the reactor pressure vessel steel in the process of neutron irradiation, there is a correlation between the change rate of the electromagnetic performances and the change rate of the mechanical performances of the material. Via monitoring the change of the electromagnetic performances of the materials during the service of the reactor pressure vessel, the functional relationship between the electromagnetic performances and the change rate of the mechanical performances can be used to predict the change of the mechanical performances of the reactor pressure vessel steel (tensile strength, upper platform energy, ductile-brittle transition temperature and reference temperature), so as to evaluate the degree of radiation embrittlement of the reactor pressure vessel.

In the process of neutron irradiation embrittlement of reactor pressure vessel steel, the functional relationship between the change rate of electromagnetic performances and the change rate of the mechanical performances is:

$$\delta(Y) = A + B * \exp[C * \delta(X)]$$

wherein an electromagnetic performance change rate $\delta(X) = |X - X_0|/X_0$, an mechanical performance change rate $\delta(Y) = |Y - Y_0|/Y_0$, and A, B and C are calculation coefficients. The electromagnetic performances include any one of tresistivity, initial magnetic susceptibility and saturation magnetization work, and the mechanical performances include any one of the tensile strength, the upper platform energy, the ductile-brittle transition temperature and the reference temperature.

The calculation coefficients A, B, and C are obtained by an experience reference method or a calculation method, which are respectively introduced as following.

1. Experience reference method: At present, the materials of commercial reactor pressure vessels in the world can be divided into two categories according to the material alloy composition system, i.e. western Mn-Ni-Mo alloy steel and Russian Cr-Mo-V alloy steel, wherein western Mn-Ni-Mo alloy steel mainly includes SA508-III steel and SA538B steel. For reactor pressure vessel materials of the same material grade, the values of A, B, and C are relatively small, and can be corrected by referring to the values of similar grades and the test data of traditional irradiation supervision samples. In addition, for SA508-III steel, which is currently the most widely used in reactor pressure vessels of nuclear power plants (nearly 300 nuclear power units around the world use this material), the values of A, B, and C can also be determined and optimized via technologies such as big data and machine learning

2. Calculation method: According to the basic theory of materials science, using large-scale professional calculation programs, based on phase field simulation, first principle, finite element simulation, Monte Carlo simulation, etc., theoretical calculations are carried out according to the original chemical composition of materials and microstructure characteristics, to obtain the values of the A, B, and C after repeated iterations.

Referring to Figs. 1 to 3, which shows respectively the functional relationship diagrams of mechanical performances and resistivity, initial magnetic susceptibility and saturation magnetization work in the method for monitoring irradiation embrittlement of nuclear power plant reactor pressure vessel.

The calculation process of the mechanical performances will be described below in detail in with reference to the examples.

**Example 1: Upper Platform Energy-Resistivity**

It can be seen from Fig. 1(b) that:

$$\Delta USE/ USE_0 = 0.59 - 0.54 \exp(-2.74 \Delta\rho/\rho_0) \tag{4.1}$$

wherein, $\Delta USE = USE0 - USE$; $\Delta\rho = \rho - \rho0$

Notice: during the irradiation embrittlement process of RPV steel, the upper platform energy of the material decreases gradually. $\Delta USE$ is defined as $\Delta USE = USE_0 - USE$ in the specification.

The unit of USE is Joule, and the unit of $\rho$ is $\times 10^{-7}$ ohm·m.

For the reactor pressure vessel steel as studied, $USE_0$ is 335J, $\rho_0$ is $3.03 \times 10^{-7} \Omega \cdot m$, and USE= $137.01 + 2803.03 \exp(-0.90\rho)$ is obtained by substituting the above formula for calculation.

**Example 2: Reference temperature - initial magnetic susceptibility**

It can be seen from Fig. 2(d) that,

$$\Delta T_0/T_{00}=0.99-1.00\exp(-4.27\Delta\chi/\chi_0) \tag{4.2}$$

wherein $\Delta T0 = T_0 - T_{00}$; $\Delta\chi=\chi_0-\chi$.

Notice: during the irradiation embrittlement process of RPV steel, the reference temperature of the material is gradually increased, $\Delta T0$ is defined as $\Delta T_0=T_0-T_{00}$; while the initial magnetic susceptibility is gradually decreased, $\Delta\chi$ is defined as $\Delta\chi=\chi_0-\chi$.

The unit of $T_0$ is absolute temperature, and $\chi$ is dimensionless.

For the reactor pressure vessel steel as studied, $T_{00}$ is 203K, and $\chi_0$ is 11.406. After substituting the above formula for calculation, T0=404.97-2.84exp (0.37$\chi$).

**Example 3: ductile-brittle transition temperature-saturation magnetization work**

It can be seen from Fig. 3(c) that,

$$\Delta RT_{NDT}/RT_{NDT0}=0.94-0.89\exp(-1.77\Delta W/W_0) \tag{4.3}$$

wherein, $\Delta RTNDT = RTNDT - RTNDT0$; $\Delta W=W-W0$.

Notice, during the irradiation embrittlement process of reactor pressure vessel steel, the ductile-brittle transition temperature of the material increases gradually, so $\Delta RTNDT$ is defined as $\Delta RT_{NDT}=RT_{NDT}-RT_{NDT0}$.

The unit of RTNDT is absolute temperature, and the unit of W is kilojoules per cubic meter.

For the reactor pressure vessel steel as studied, $RT_{NDT0}$ is 241K, Wo is 246.3 $KJ/m^3$, and RT-NDT=474.77-492.13exp (-0.0030W) is obtained after substituting the above formula for calculation.

Table 4.1 Fitting accuracy characterized via the relationship between the change rate of mechanical performances of reactor pressure vessel steel and the rate of change of electromagnetic performances using prediction unified model, corresponding to Figs. 1 to 3 in turn.

| Mechanical performances | Resistivity | Initial magnetic susceptibility | Saturation magnetization work |
|---|---|---|---|
| strength | 0.9855 | 0.9815 | 0.9888 |
| Upper platform energy | 0.9452 | 0.9630 | 0.9086 |
| ductile-brittle transition temperature | 0.9480 | 0.9798 | 0.9868 |
| reference temperature | 0.9718 | 0.9945 | 0.9794 |

The square data points in Figs. 1 to 3 are the measured data of the samples irradiated by the existing irradiation supervision method. It can be seen from Figs. 1 to 3 that the measured data is in good agreement with the predicted curve and the deviation is very small, which fully meets the irradiation embrittlement assessment requirements of the nuclear power plant reactor pressure vessel (safety margin is generally multiple relationship).

It can be seen from the above detailed description of the embodiments of the present invention that, relative to the prior art, the present invention at least has the following advantages.

(1) The electromagnetic performances of the reactor pressure vessel steel during the operation of the nuclear power plant can be tested in real time, and the change of the mechanical performances data of the reactor pressure vessel steel can be obtained by real-time calculation. The electromagnetic performances of the reactor pressure vessel steel are tested non-destructively, and the number of tests is not limited. Therefore, during the whole life of the nuclear power plant, the irradiation damage fluence and mechanical performances changes of the reactor pressure vessel (RPV) can be monitored continuously in real time and it can also be used for the RPV irradiation supervision during the life extension operation of the nuclear power plant in the future.

(2) The test equipments and operation do not require special irradiation safety protection, and there is almost no requirement for the external space of the equipments. Therefore, the method for monitoring radiation embrittlement of a nuclear power plant reactor pressure vessel of the present invention has low cost and good safety. No radioactive waste is generated, and there is no need for waste treatment.

(3) The irradiation embrittlement degree of multiple locations of the reactor pressure vessel can be monitored at the same time. The change of the irradiation embrittlement degree of a specific position, such as monitoring the initiation and extension behavior of micro-cracks or suspected micro-cracks found during in-service inspections can be tracked.

The above described embodiments are only preferred embodiments of the present invention, and are not intended to limit the scope of the present invention. Any modification, equivalent replacement and improvement within the spirit and principle of the present invention should be included in the protection scope of the present invention. In addition, although certain specific terms are used in the specification, these terms are only for the convenience of description and do not constitute any limitation to the present invention.

**Claims**

1.  A method for monitoring irradiation embrittlement of nuclear power plant reactor pressure vessel, comprising the steps of:

    1) acquiring an electromagnetic performance parameter value Xo and a mechanical performance parameter value Yo of a reactor pressure vessel steel in an initial state;
    2) testing in real time to acquire an electromagnetic performance parameter X of the reactor pressure vessel steel at a certain designated time point and at a monitoring location after being subjected to irradiation embrittlement; and
    3) determining a mechanical performance parameter Y according to a function relationship $\delta(Y)$ $=A+B^{*}\exp[C^{*}\delta(X)]$, wherein an electromagnetic performance change rate $\delta(X)=|X-X_0|/X_0$, an mechanical performance change rate $\delta(Y)=|Y-Y_0|/Y_0$, and A, B and C are calculation coefficients.

2.  The method for monitoring irradiation embrittlement of nuclear power plant reactor pressure vessel according to claim 1, **characterized in that** the electromagnetic performance parameter is any one of resistivity, initial magnetic susceptibility, and saturation magnetization work, and the mechanical performance parameter is any one of real-time tensile strength $R_m$, real-time upper platform energy USE, ductile-brittle transition temperature RTNDT, and reference temperature $T_0$.

3.  The method for monitoring irradiation embrittlement of nuclear power plant reactor pressure vessel according to claim 1, **characterized in that** the electromagnetic performance parameter value Xo and the mechanical performance parameter value Yo of the reactor pressure vessel steel in initial state are acquired via searching relevant data in a completion report provided by an equipment manufacturer.

4.  The method for monitoring irradiation embrittlement of nuclear power plant reactor pressure vessel according to claim 1, **characterized in that**, for a specific nuclear power plant and reactor pressure vessel, the calculation coefficients A, B, and C can be determined or revised by traditional mechanical performances test of irradiated supervised samples, and for a specific reactor pressure vessel, the calculation coefficients A, B, and C remain unchanged throughout the operating life of the nuclear power plant.

5.  The method for monitoring irradiation embrittlement of nuclear power plant reactor pressure vessel according to claim 1, **characterized in that**, for different electromagnetic performance parameters, values of calculation coefficients A, B and C are determined respectively.

6.  The method for monitoring irradiation embrittlement of nuclear power plant reactor pressure vessel according to claim 1, **characterized in that** values of the calculation coefficients A, B, and C are affected by radiation-sensitive composition and microstructure characteristics of the reactor pressure vessel steel in initial state, and energy spectrum of a reactor neutron irradiation field during operation of the nuclear power plant.

7.  The method for monitoring irradiation embrittlement of nuclear power plant reactor pressure vessel according to claim 6, **characterized in that** the microstructure characteristics include grain size, type and number densityof dislocation, and distribution features of a second phase.

8. The method for monitoring irradiation embrittlement of nuclear power plant reactor pressure vessel according to any one of claims 1 to 7, **characterized in that**, the method further comprises 4) carrying out safety evaluation and life prediction of structural integrity in radiation embrittlement process of the reactor pressure vessel according to the mechanical performance parameters obtained.

9. The method for monitoring irradiation embrittlement of nuclear power plant reactor pressure vessel according to any one of claims 1 to 7, **characterized in that** in step 2), the electromagnetic performance parameter X of the reactor pressure vessel steel at a certain designated time point and at a monitoring location after being subjected to irradiation-embrittlement is obtained via an online, non-destructive real-time test.

10. The method for monitoring irradiation embrittlement of nuclear power plant reactor pressure vessel according to any one of claims 1 to 7, **characterized in that** the calculation coefficients A, B, and C are obtained by an experience reference method or a calculation method.

Fig. 1

Fig. 2

Fig. 3

## INTERNATIONAL SEARCH REPORT

| International application No. |
| --- |
| **PCT/CN2019/122438** |

**A. CLASSIFICATION OF SUBJECT MATTER**

G21C 17/003(2006.01)i

According to International Patent Classification (IPC) or to both national classification and IPC

**B. FIELDS SEARCHED**

Minimum documentation searched (classification system followed by classification symbols)

G21C

Documentation searched other than minimum documentation to the extent that such documents are included in the fields searched

Electronic data base consulted during the international search (name of data base and, where practicable, search terms used)

CNABS; CNTXT; VEN; WOTXT; USTXT; EPTXT; CNKI: 反应堆, 压力容器, 辐照脆化, radiat+ damage, reactor

**C. DOCUMENTS CONSIDERED TO BE RELEVANT**

| Category* | Citation of document, with indication, where appropriate, of the relevant passages | Relevant to claim No. |
| --- | --- | --- |
| PX | CN 110349686 A (CHINA NUCLEAR POWER ENGINEERING CO., LTD. et al.) 18 October 2019 (2019-10-18) claims 1-10 | 1-10 |
| X | CN 109817357 A (CHINA NUCLEAR POWER ENGINEERING CO., LTD. et al.) 28 May 2019 (2019-05-28) claims 1-7, description, paragraphs [0070]-[0081] | 1-10 |
| A | CN 109817356 A (CHINA NUCLEAR POWER ENGINEERING CO., LTD. et al.) 28 May 2019 (2019-05-28) entire document | 1-10 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **09 March 2020** | **01 April 2020** |

| Name and mailing address of the ISA/CN | Authorized officer |
| --- | --- |
| **China National Intellectual Property Administration (ISA/ CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2019/122438** |

| Patent document cited in search report | | | Publication date (day/month/year) | Patent family member(s) | Publication date (day/month/year) |
| --- | --- | --- | --- | --- | --- |
| CN | 110349686 | A | 18 October 2019 | None | |
| CN | 109817357 | A | 28 May 2019 | None | |
| CN | 109817356 | A | 28 May 2019 | None | |

Form PCT/ISA/210 (patent family annex) (January 2015)